# EUROPEAN PATENT APPLICATION

(11) **EP 4 797 783 A1**
(43) Date of publication of application: **26.08.2026**
(21) Application number: 24884968.9
(22) Date of filing: 01.11.2024
(51) Int. Cl.: H04W 28/02

(54) **COMMUNICATION METHOD AND APPARATUS**

(30) Priority: 03.11.2023 CN 202311460536
(71) Applicant: HUAWEI TECHNOLOGIES CO., LTD., Shenzhen, Guangdong 518129 (CN)
(72) Inventor: LU, Yujiao, Shenzhen, Guangdong 518129 (CN); FAN, Qiang, Shenzhen, Guangdong 518129 (CN)
(74) Representative: Pfenning, Meinig & Partner mbB
(86) International application number: PCT/CN2024/129338
(87) International publication number: WO 2025/092971

(57) **Abstract**

This application provides a communication method and apparatus, which may be applied to extended reality XR services. The method includes: receiving indication information from a second network device, where the indication information indicates that a first discard timer for low importance is configured for a terminal device, and the first discard timer for low importance is used to control discarding of low importance data; and sending first information based on a network state, where the first information is used to determine whether to activate the first discard timer for low importance. In this way, when an access network device is in a CU-DU split architecture, normal running of a discard timer for low importance is ensured, thereby relieving transmission pressure of uplink or downlink data.

## Description

This application claims priority to Chinese Patent Application No. 202311460536.7, filed with the China National Intellectual Property Administration on November 3, 2023 and entitled "COMMUNICATION METHOD AND APPARATUS", which is incorporated herein by reference in its entirety.

### TECHNICAL FIELD

This application relates to the communication field, and more specifically, to a communication method and apparatus.

### BACKGROUND

With continuous development of communication technologies, extended reality (extended reality, XR) is one of current 5G multimedia applications that are mainly considered in the industrial field.

In XR services, protocol data unit sets (protocol data unit sets, PDU sets) of different importance may appear in a same quality of service (quality of service, QoS) flow of an XR service due to different coding modes of applications. To support the XR services and reflect different importance of the XR services, the 3rd generation partnership project (the 3rd generation partnership project, 3GPP) enhances a packet data convergence protocol (packet data convergence protocol, PDCP) packet discarding mechanism, that is, configures a discard timer for low importance for a PDCP entity of UE. When network congestion occurs, an access network device activates the discard timer for low importance for a terminal device, so that the terminal device can discard a low importance data packet.

When the access network device is in a network architecture in which a central unit (central unit, CU) and a distributed unit (distributed unit, DU) are split, because the CU and the DU have different functions for the discard timer for low importance, how to ensure normal running of the discard timer for low importance when the access network device is in the CU-DU split architecture is an urgent problem to be resolved.

### SUMMARY

This application provides a communication method and apparatus, to ensure normal running of a discard timer for low importance when an access network device is in a CU-DU split architecture, thereby relieving transmission pressure of uplink or downlink data.

According to a first aspect, a communication method is provided. The method may be performed by a first network device, or may be performed by a module (for example, a chip) of the first network device, or may be implemented by a logical node, a logical module, or software that can implement all or some functions of the first network device. The method includes: receiving indication information from a second network device, where the indication information indicates that a first discard timer for low importance is configured for a terminal device, and the first discard timer for low importance is used to control discarding of low importance data; and sending first information based on a network state, where the first information is used to determine whether to activate the first discard timer for low importance.

In the foregoing technical solution, the first network device may learn of a status of configuring, by the second network device, the first discard timer for low importance for the terminal device, may detect the network state in time, and send, based on the network state, the first information used to determine whether to activate the first discard timer for low importance. In this way, during network congestion, a device that maintains the first discard timer for low importance may discard low importance data in time, so that network transmission pressure can be relieved in time without affecting transmission of important data.

With reference to the first aspect, in some implementations of the first aspect, the indication information further indicates that an initial state of the first discard timer for low importance is an active state or an inactive state.

In this way, the first network device may learn of an initial configuration of the first discard timer for low importance, so that the first information sent by the first network device is more appropriate. For example, when the first discard timer for low importance is initially configured to be in an inactive state, the first network device may send the first information when detecting that the network congestion exists, to activate the first discard timer for low importance, so as to relieve the network congestion. Alternatively, when the first discard timer for low importance is initially configured to be in an active state, the first network device may send the first information when detecting that the network congestion does not exist, to deactivate the first discard timer for low importance, so as to avoid premature discarding of low importance data.

With reference to the first aspect, in some implementations of the first aspect, the indication information specifically indicates a first data radio bearer DRB corresponding to the first discard timer for low importance.

In some implementations, the indication information specifically indicates a first PDCP entity corresponding to the first discard timer for low importance, and the first PCDP entity corresponds to the first DRB.

In this way, the first discard timer for low importance may be specifically for some DRBs, so that the first discard timer for low importance is more targeted, and this helps the first network device further formulate a more appropriate packet discarding manner when the network is still congested subsequently. For example, when detecting that the network congestion exists, the first network device may send, based on congestion severity, the first information to activate a first discard timer for low importance of some or all DRBs, to discard low importance data packets corresponding to the some or all DRBs, so that the network congestion can be relieved to different degrees.

With reference to the first aspect, in some implementations of the first aspect, the indication information further indicates duration of the first discard timer for low importance.

In this way, after sending the first information when the network congestion exists, the first network device may estimate, in time based on the duration of the first discard timer for low importance, whether use of the first discard timer for low importance for the first DRB relieves the network congestion, so that the first network device further formulates a more appropriate packet discarding manner in time when the network is still congested subsequently. Alternatively, the first network device may determine, based on the duration of the first discard timer for low importance, time that can be used for air interface transmission of the low importance data, so as to formulate an appropriate scheduling manner.

With reference to the first aspect, in some implementations of the first aspect, the indication information specifically indicates that the first discard timer for low importance is configured for uplink data of the terminal device. The sending the first information based on the network state includes: sending the first information to the terminal device based on the network state.

In the foregoing technical solution, the first network device learns that the second network device configures the first discard timer for low importance for the uplink data of the terminal device, and the first network device may detect the network in time, so as to send, to the terminal device based on the network state, the first information about activating or deactivating the first discard timer for low importance, so that the terminal device can use the first discard timer for low importance in time, thereby relieving transmission pressure of the uplink data.

With reference to the first aspect, in some implementations of the first aspect, before the receiving the indication information, the method further includes: sending first request information to the second network device, where the first request information is used to request to configure the first discard timer for low importance for the uplink data of the terminal device.

In this way, the second network device triggers sending of the indication information by using the first request information, so that a sending occasion of the indication information is more appropriate and timelier.

With reference to the first aspect, in some implementations of the first aspect, the first request information is specifically used to request to configure the first discard timer for low importance for uplink data related to the first DRB of the terminal device.

In this way, the second network device configures, based on the first request information, the first discard timer for low importance for the terminal device for the first DRB, so that a discarding granularity of a subsequent low importance data packet is smaller.

With reference to the first aspect, in some implementations of the first aspect, the first indication information is carried in an accept response message corresponding to the first request information.

With reference to the first aspect, in some implementations of the first aspect, after the sending the first information based on the network state, if the network state is still congested, the method further includes: sending second request information to the second network device, where the second request information is used to request to configure a second discard timer for low importance for uplink data related to a second DRB of the terminal device.

In this way, when the network state is still congested, the first network device requests the second network device to configure the second discard timer for low importance for the uplink data related to the second DRB of the terminal device, so that the packet discarding manner can be more appropriate.

With reference to the first aspect, in some implementations of the first aspect, the indication information specifically indicates that the first discard timer for low importance is configured for downlink data of the terminal device. The sending the first information based on the network state includes: sending the first information to the second network device based on the network state.

In the foregoing technical solution, the first network device learns that the second network device configures the first discard timer for low importance for the downlink data of the terminal device, and the first network device may detect the network in time, to send, to the second network device based on the network state, the first information about activating or deactivating the first discard timer for low importance, so that the second network device can use the first discard timer for low importance in time, thereby relieving transmission pressure of the downlink data.

With reference to the first aspect, in some implementations of the first aspect, the sending the first information to the second network device based on the network state includes: when the network state is congested, sending the first information to the second network device, where the first information is used to determine to activate the first discard timer for low importance; or when the network state is not congested, sending the first information to the second network device, where the first information is used to determine to deactivate the first discard timer for low importance.

With reference to the first aspect, in some implementations of the first aspect, the first information includes at least one of the following information: suggestion information, network congestion degree assistance information, air interface quality assistance information, an expected data amount or an expected rate, and protocol data unit set importance PSI suggestion information, where the suggestion information is used to suggest whether to activate the first discard timer for low importance; the network congestion degree assistance information indicates a network congestion degree; the air interface quality assistance information indicates uplink or downlink air interface data transmission quality; the expected data amount or the expected rate indicates an expected data amount or an expected data transmission rate of an air interface; and the PSI suggestion information indicates PSI of the data corresponding to the first discard timer for low importance.

In this way, the second network device may directly activate or deactivate the first discard timer for low importance based on the suggestion information, or the second network device may determine, based on other assistance information, to activate or deactivate the first discard timer for low importance, so that the second network device maintains the first discard timer for low importance more flexibly.

With reference to the first aspect, in some implementations of the first aspect, the first network device is a distributed unit DU, and the second network device is a central unit CU.

According to a second aspect, a communication method is provided. The method may be performed by a second network device, or may be performed by a module (for example, a chip) of the second network device, or may be implemented by a logical node, a logical module, or software that can implement all or some functions of the second network device. The method includes: generating indication information, where the indication information indicates that a first discard timer for low importance is configured for a terminal device, and the first discard timer for low importance is used to control discarding of low importance data; and sending the indication information to a first network device.

It should be understood that the solution of the second aspect is correspondingly similar to the solution of the first aspect. For beneficial effects generated by the solution of the second aspect, refer to the first aspect. Details are not described herein again.

With reference to the second aspect, in some implementations of the second aspect, the indication information further indicates that an initial state of the first discard timer for low importance is an active state or an inactive state.

With reference to the second aspect, in some implementations of the second aspect, the indication information specifically indicates a first data radio bearer DRB corresponding to the first discard timer for low importance.

With reference to the second aspect, in some implementations of the second aspect, the indication information further indicates duration of the first discard timer for low importance.

With reference to the second aspect, in some implementations of the second aspect, the indication information specifically indicates that the first discard timer for low importance is configured for uplink data of the terminal device. Before the generating the indication information, the method further includes: sending configuration information to the terminal device, where the configuration information is used to configure the first discard timer for low importance for the uplink data of the terminal device.

With reference to the second aspect, in some implementations of the second aspect, before the generating the indication information, the method further includes: receiving first request information from the second network device, where the first request information is used to request to configure the first discard timer for low importance for the uplink data of the terminal device.

With reference to the second aspect, in some implementations of the second aspect, the first request information is specifically used to request to configure the first discard timer for low importance for uplink data related to the first DRB of the terminal device.

With reference to the second aspect, in some implementations of the second aspect, the first indication information is carried in an accept response message corresponding to the first request information.

With reference to the second aspect, in some implementations of the second aspect, after the sending the indication information to the first network device, the method further includes: receiving second request information from the first network device, where the second request information is used to request to configure a second discard timer for low importance for uplink data related to a second DRB of the terminal device.

With reference to the second aspect, in some implementations of the second aspect, the indication information specifically indicates that the first discard timer for low importance is configured for downlink data of the terminal device.

With reference to the second aspect, in some implementations of the second aspect, the method further includes: receiving first information from the first network device, where the first information is used to determine whether to activate the first discard timer for low importance; and activating or deactivating the first discard timer for low importance based on the first information.

With reference to the second aspect, in some implementations of the second aspect, the first information includes at least one of the following information: suggestion information, network congestion degree assistance information, air interface quality assistance information, an expected data amount or an expected rate, and protocol data unit set importance PSI suggestion information, where the suggestion information is used to suggest whether to activate the first discard timer for low importance; the network congestion degree assistance information indicates a network congestion degree; the air interface quality assistance information indicates uplink or downlink air interface data transmission quality; the expected data amount or the expected rate indicates an expected data amount or an expected data transmission rate of an air interface; and the PSI suggestion information indicates PSI of the data corresponding to the first discard timer for low importance.

With reference to the second aspect, in some implementations of the second aspect, the first network device is a distributed unit DU, and the second network device is a central unit CU.

According to a third aspect, a communication method is provided. The method may be performed by a first network device, or may be performed by a module (for example, a chip) of the first network device, or may be implemented by a logical node, a logical module, or software that can implement all or some functions of the first network device. The method includes: receiving third request information from a second network device, where the third request information is used to request parameter information related to a network state; and sending second information to the second network device, where the second information is used to determine whether to activate a third discard timer for low importance, and the third discard timer for low importance is used to control discarding of low importance data in downlink data.

In the foregoing technical solution, the second network device may learn, by using a request and a response that are about the network state and that are between the first network device and the second network device, that the network state is congested or not congested. This helps the second network device determine to activate or deactivate the third discard timer for low importance, so that the second network device can use the third discard timer for low importance in time, to relieve transmission pressure of the downlink data.

With reference to the third aspect, in some implementations of the third aspect, the second information includes at least one of the following information: network congestion degree assistance information, air interface quality assistance information, and an expected data amount or an expected rate. The network congestion degree assistance information indicates a network congestion degree; the air interface quality assistance information indicates uplink or downlink air interface data transmission quality; the expected data amount or the expected rate indicates an expected data amount or an expected data transmission rate of an air interface.

With reference to the third aspect, in some implementations of the third aspect, the first network device is a distributed unit DU, and the second network device is a central unit CU.

According to a fourth aspect, a communication method is provided. The method may be performed by a second network device, or may be performed by a module (for example, a chip) of the second network device, or may be implemented by a logical node, a logical module, or software that can implement all or some functions of the second network device. The method includes: sending third request information to a first network device, where the third request information is used to request parameter information related to a network state; and receiving second information from the first network device, where the second information is used to determine whether to activate a third discard timer for low importance, and the third discard timer for low importance is used to control discarding of low importance data in downlink data.

It should be understood that the solution of the fourth aspect is correspondingly similar to the solution of the third aspect. For beneficial effects generated by the solution of the fourth aspect, refer to the third aspect. Details are not described herein again.

With reference to the fourth aspect, in some implementations of the fourth aspect, the second information includes at least one of the following information: network congestion degree assistance information, air interface quality assistance information, and an expected data amount or an expected rate. The network congestion degree assistance information indicates a network congestion degree; the air interface quality assistance information indicates uplink or downlink air interface data transmission quality; the expected data amount or the expected rate indicates an expected data amount or an expected data transmission rate of an air interface.

With reference to the fourth aspect, in some implementations of the fourth aspect, the method further includes: activating or deactivating a first discard timer for low importance based on the second information.

With reference to the fourth aspect, in some implementations of the fourth aspect, the first network device is a distributed unit DU, and the second network device is a central unit CU.

According to a fifth aspect, a communication apparatus is provided. The apparatus may be a first network device, or may be a module (for example, a chip) of the first network device, or may be a logical node, a logical module, or software that can implement all or some functions of the first network device. The apparatus includes a transceiver unit. The transceiver unit is configured to receive indication information from a second network device, where the indication information indicates that a first discard timer for low importance is configured for a terminal device, and the first discard timer for low importance is used to control discarding of low importance data. The transceiver unit is configured to send first information based on a network state, where the first information is used to determine whether to activate the first discard timer for low importance.

It should be understood that the solution of the fifth aspect is correspondingly similar to the solution of the first aspect. For beneficial effects generated by the solution of the fifth aspect, refer to the first aspect. Details are not described herein again.

With reference to the fifth aspect, in some implementations of the fifth aspect, the indication information further indicates that an initial state of the first discard timer for low importance is an active state or an inactive state.

With reference to the fifth aspect, in some implementations of the fifth aspect, the indication information specifically indicates a first data radio bearer DRB corresponding to the first discard timer for low importance.

In some implementations, the indication information specifically indicates a first PDCP entity corresponding to the first discard timer for low importance, and the first PCDP entity corresponds to the first DRB.

With reference to the fifth aspect, in some implementations of the fifth aspect, the indication information further indicates duration of the first discard timer for low importance.

With reference to the fifth aspect, in some implementations of the fifth aspect, the indication information specifically indicates that the first discard timer for low importance is configured for uplink data of the terminal device. The transceiver unit is specifically configured to send the first information to the terminal device based on the network state.

With reference to the fifth aspect, in some implementations of the fifth aspect, before the receiving the indication information, the apparatus further includes: sending first request information to the second network device, where the first request information is used to request to configure the first discard timer for low importance for the uplink data of the terminal device.

With reference to the fifth aspect, in some implementations of the fifth aspect, the first request information is specifically used to request to configure the first discard timer for low importance for uplink data related to the first DRB of the terminal device.

With reference to the fifth aspect, in some implementations of the fifth aspect, the first indication information is carried in an accept response message corresponding to the first request information.

With reference to the fifth aspect, in some implementations of the fifth aspect, after the sending the first information based on the network state, if the network state is still congested, the transceiver unit is further configured to send second request information to the second network device, where the second request information is used to request to configure a second discard timer for low importance for uplink data related to a second DRB of the terminal device.

With reference to the fifth aspect, in some implementations of the fifth aspect, the indication information specifically indicates that the first discard timer for low importance is configured for downlink data of the terminal device. The sending unit is specifically configured to send the first information to the second network device based on the network state.

With reference to the fifth aspect, in some implementations of the fifth aspect, the sending unit is specifically configured to: when the network state is congested, send the first information to the second network device, where the first information is used to determine to activate the first discard timer for low importance; or when the network state is not congested, send the first information to the second network device, where the first information is used to determine to deactivate the first discard timer for low importance.

With reference to the fifth aspect, in some implementations of the fifth aspect, the first information includes at least one of the following information: suggestion information, network congestion degree assistance information, air interface quality assistance information, an expected data amount or an expected rate, and protocol data unit set importance PSI suggestion information, where the suggestion information is used to suggest whether to activate the first discard timer for low importance; the network congestion degree assistance information indicates a network congestion degree; the air interface quality assistance information indicates uplink or downlink air interface data transmission quality; the expected data amount or the expected rate indicates an expected data amount or an expected data transmission rate of an air interface; and the PSI suggestion information indicates PSI of the data corresponding to the first discard timer for low importance.

With reference to the fifth aspect, in some implementations of the fifth aspect, the first network device is a distributed unit DU, and the second network device is a central unit CU.

According to a sixth aspect, a communication apparatus is provided. The apparatus may be a second network device, or may be a module (for example, a chip) of the second network device, or may be a logical node, a logical module, or software that can implement all or some functions of the second network device. The apparatus includes a transceiver unit and a processing unit. The processing unit is configured to generate indication information, where the indication information indicates that a first discard timer for low importance is configured for a terminal device, and the first discard timer for low importance is used to control discarding of low importance data. The transceiver unit is configured to send indication information to a first network device.

It should be understood that the solution of the sixth aspect is correspondingly similar to the solution of the fifth aspect. For beneficial effects generated by the solution of the sixth aspect, refer to the fifth aspect. Details are not described herein again.

With reference to the sixth aspect, in some implementations of the sixth aspect, the indication information further indicates that an initial state of the first discard timer for low importance is an active state or an inactive state.

With reference to the sixth aspect, in some implementations of the sixth aspect, the indication information specifically indicates a first data radio bearer DRB corresponding to the first discard timer for low importance.

With reference to the sixth aspect, in some implementations of the sixth aspect, the indication information further indicates duration of the first discard timer for low importance.

With reference to the sixth aspect, in some implementations of the sixth aspect, the indication information specifically indicates that the first discard timer for low importance is configured for uplink data of the terminal device. Before the generating the indication information, the transceiver unit is further configured to send configuration information to the terminal device, where the configuration information is used to configure the first discard timer for low importance for the uplink data of the terminal device.

With reference to the sixth aspect, in some implementations of the sixth aspect, before the generating the indication information, the transceiver unit is further configured to receive first request information from the second network device, where the first request information is used to request to configure the first discard timer for low importance for the uplink data of the terminal device.

With reference to the sixth aspect, in some implementations of the sixth aspect, the first request information is specifically used to request to configure the first discard timer for low importance for uplink data related to the first DRB of the terminal device.

With reference to the sixth aspect, in some implementations of the sixth aspect, the first indication information is carried in an accept response message corresponding to the first request information.

With reference to the sixth aspect, in some implementations of the sixth aspect, after the sending the indication information to the first network device, the transceiver unit is further configured to receive second request information from the first network device, where the second request information is used to request to configure a second discard timer for low importance for uplink data related to a second DRB of the terminal device.

With reference to the sixth aspect, in some implementations of the sixth aspect, the indication information specifically indicates that the first discard timer for low importance is configured for downlink data of the terminal device.

With reference to the sixth aspect, in some implementations of the sixth aspect, the transceiver unit is further configured to receive first information from the first network device, where the first information is used to determine whether to activate the first discard timer for low importance. The processing unit is further configured to activate or deactivate the first discard timer for low importance based on the first information.

With reference to the sixth aspect, in some implementations of the sixth aspect, the first information includes at least one of the following information: suggestion information, network congestion degree assistance information, air interface quality assistance information, an expected data amount or an expected rate, and protocol data unit set importance PSI suggestion information, where the suggestion information is used to suggest whether to activate the first discard timer for low importance; the network congestion degree assistance information indicates a network congestion degree; the air interface quality assistance information indicates uplink or downlink air interface data transmission quality; the expected data amount or the expected rate indicates an expected data amount or an expected data transmission rate of an air interface; and the PSI suggestion information indicates PSI of the data corresponding to the first discard timer for low importance.

With reference to the sixth aspect, in some implementations of the sixth aspect, the first network device is a distributed unit DU, and the second network device is a central unit CU.

According to a seventh aspect, a communication apparatus is provided. The apparatus may be a first network device, or may be a module (for example, a chip) of the first network device, or may be a logical node, a logical module, or software that can implement all or some functions of the first network device. The apparatus includes a transceiver unit. The transceiver unit is configured to receive third request information from a second network device, where the third request information is used to request parameter information related to a network state. The transceiver unit is configured to send second information to the second network device, where the second information is used to determine whether to activate a third discard timer for low importance, and the third discard timer for low importance is used to control discarding of low importance data in downlink data.

It should be understood that the solution of the seventh aspect is correspondingly similar to the solution of the third aspect. For beneficial effects generated by the solution of the seventh aspect, refer to the third aspect. Details are not described herein again.

With reference to the seventh aspect, in some implementations of the seventh aspect, the second information includes at least one of the following information: network congestion degree assistance information, air interface quality assistance information, and an expected data amount or an expected rate. The network congestion degree assistance information indicates a network congestion degree; the air interface quality assistance information indicates uplink or downlink air interface data transmission quality; the expected data amount or the expected rate indicates an expected data amount or an expected data transmission rate of an air interface.

With reference to the seventh aspect, in some implementations of the seventh aspect, the first network device is a distributed unit DU, and the second network device is a central unit CU.

According to an eighth aspect, a communication apparatus is provided. The apparatus may be a second network device, or may be a module (for example, a chip) of the second network device, or may be a logical node, a logical module, or software that can implement all or some functions of the second network device. The apparatus includes a transceiver unit. The transceiver unit is configured to send third request information to a first network device, where the third request information is used to request parameter information related to a network state. The transceiver unit is configured to receive second information from the first network device, where the second information is used to determine whether to activate a third discard timer for low importance, and the third discard timer for low importance is used to control discarding of low importance data in downlink data.

It should be understood that the solution of the eighth aspect is correspondingly similar to the solution of the seventh aspect. For beneficial effects generated by the solution of the eighth aspect, refer to the seventh aspect. Details are not described herein again.

With reference to the eighth aspect, in some implementations of the eighth aspect, the second information includes at least one of the following information: network congestion degree assistance information, air interface quality assistance information, and an expected data amount or an expected rate. The network congestion degree assistance information indicates a network congestion degree; the air interface quality assistance information indicates uplink or downlink air interface data transmission quality; the expected data amount or the expected rate indicates an expected data amount or an expected data transmission rate of an air interface.

With reference to the eighth aspect, in some implementations of the eighth aspect, the apparatus further includes a processing unit. The processing unit is configured to activate or deactivate a first discard timer for low importance based on the second information.

With reference to the eighth aspect, in some implementations of the eighth aspect, the first network device is a distributed unit DU, and the second network device is a central unit CU.

According to a ninth aspect, a communication apparatus is provided. The apparatus includes: a memory, configured to store a program; and a processor, configured to execute a computer program or instructions stored in the memory. When the computer program or the instructions stored in the memory are executed, the processor is configured to perform the method provided in any one of the implementations of the first aspect or the fourth aspect.

In an implementation, the apparatus is a first network device or a second network device.

In another implementation, the apparatus is a chip, a chip system, or a circuit in a network device or a second network device.

According to a tenth aspect, this application provides a processor, configured to perform the method provided in any one of the implementations of the first aspect to the fourth aspect. In a process of performing these methods, a process of sending the foregoing information and a process of obtaining/receiving the foregoing information in the foregoing methods may be understood as a process of outputting the foregoing information by the processor and a process of receiving the foregoing inputted information by the processor. When outputting the foregoing information, the processor outputs the foregoing information to an interface, and transmits the information through the interface. After the foregoing information is output by the processor, other processing may further need to be performed on the information before the information arrives at the interface. Similarly, when the processor receives the foregoing input information, the interface obtains/receives the foregoing information, and inputs the foregoing information into the processor. Further, after the interface receives the foregoing information, other processing may need to be performed on the foregoing information before the foregoing information is input into the processor.

Unless otherwise specified, or if operations such as related transmitting, sending and obtaining/receiving do not conflict with actual functions or internal logic in related descriptions, the operations may be understood as operations such as outputting, receiving, and inputting, or may be understood as transmitting, sending and receiving operations performed by a radio frequency circuit and an antenna. This is not limited in this application.

In an implementation process, the processor may be a processor specially configured to perform these methods, or a processor, for example, a general-purpose processor, that executes a computer program or instructions in a memory to perform these methods. The memory may be a non-transitory (non-transitory) memory, for example, a read-only memory (read-only memory, ROM). The memory and the processor may be integrated on a same chip, or may be separately disposed on different chips. A type of the memory and a manner of disposing the memory and the processor are not limited in embodiments of this application.

According to an eleventh aspect, a computer-readable storage medium is provided. The computer-readable storage medium stores program code to be executed by a device, and the program code is for performing the method provided in any one of the implementations of the first aspect to the fourth aspect.

According to a twelfth aspect, a computer program product including instructions is provided. When the computer program product runs on a computer, the computer is caused to perform the method provided in any one of the implementations of the first aspect to the fourth aspect.

According to a thirteenth aspect, a chip is provided. The chip includes a processor and a communication interface, and the processor reads, through the communication interface, instructions stored in a memory, to perform the method provided in any one of the implementations of the first aspect to the fourth aspect.

Optionally, in an implementation, the chip further includes the memory. The memory stores a computer program or instructions. The processor is configured to execute the computer program or the instructions stored in the memory. When the computer program or the instructions are executed, the processor is configured to perform the method provided in any one of the implementations of the first aspect to the fourth aspect.

According to a fourteenth aspect, a communication system is provided, and includes a first network device and a second network device. The first network device is configured to perform the method in any one of the first aspect and the possible implementations of the first aspect, and the second network device is configured to perform the method in any one of the second aspect and the possible implementations of the second aspect. Alternatively, the first network device is configured to perform the method in any one of the third aspect and the possible implementations of the third aspect, and the second network device is configured to perform the method in any one of the fourth aspect and the possible implementations of the fourth aspect.

### BRIEF DESCRIPTION OF DRAWINGS

FIG. 1 is a diagram of a communication system according to an embodiment of this application;
FIG. 2 is a diagram of a CU-DU split architecture of an access network device according to an embodiment of this application;
FIG. 3 is a diagram of another network architecture to which an embodiment of this application is applicable;
FIG. 4a and FIG. 4b each are a diagram of a protocol stack according to an embodiment of this application;
FIG. 5a and FIG. 5b each are a diagram of a coding model according to an embodiment of this application;
FIG. 6 is an interaction diagram of a communication method according to an embodiment of this application;
FIG. 7 is an interaction diagram of another communication method according to an embodiment of this application;
FIG. 8 is an interaction diagram of still another communication method according to an embodiment of this application;
FIG. 9 is an interaction diagram of yet another communication method according to an embodiment of this application;
FIG. 10 is a diagram of a communication apparatus 1000 according to an embodiment of this application;
FIG. 11 is a diagram of a structure of a communication apparatus 1100 according to an embodiment of this application; and
FIG. 12 is a diagram of a chip system 1200 according to an embodiment of this application.

### DESCRIPTION OF EMBODIMENTS

The following describes technical solutions of this application with reference to accompanying drawings.

The technical solutions of embodiments of this application may be applied to various communication systems, such as a global system for mobile communications (Global System for Mobile communications, GSM), a code division multiple access (Code Division Multiple Access, CDMA) system, a wideband code division multiple access (Wideband Code Division Multiple Access, WCDMA) system, a general packet radio service (General Packet Radio Service, GPRS), a long term evolution (Long Term Evolution, LTE) system, an LTE frequency division duplex (Frequency Division Duplex, FDD) system, an LTE time division duplex (Time Division Duplex, TDD) system, a universal mobile telecommunications system (Universal Mobile Telecommunications System, UMTS), a worldwide interoperability for microwave access (Worldwide Interoperability for Microwave Access, WiMAX) communication system, a 5th generation (5th Generation, 5G) system or a new radio (New Radio, NR) system, and a future evolved communication system.

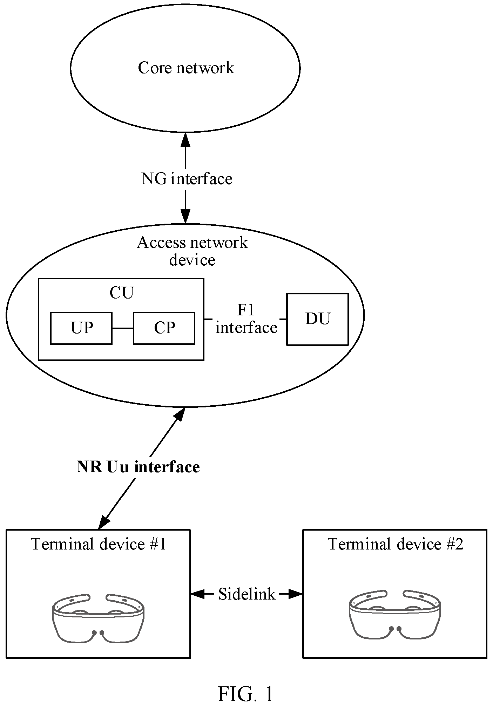

FIG. 1 is a diagram of a communication system according to an embodiment of this application.

As shown in FIG. 1, a communication system to which the solution in embodiments of this application is applied may include an access network device, a terminal device, and a core network. The communication system may be used for information exchange between the access network device and the core network, may be used for information exchange between the access network device and the terminal device, or may be used for information exchange between terminal devices. For example, as shown in FIG. 1, the access network device may communicate with the core network through an NG interface. The access network device and a terminal device #1 may directly communicate with each other through an NR Uu interface. The terminal device #1 and a terminal device #2 communicate with each other through a sidelink.

The terminal device is also referred to as user equipment (user equipment, UE), a mobile station (mobile station, MS), a mobile terminal (mobile terminal, MT), or the like, and is a device that provides voice and/or data connectivity for a user. For example, the terminal device may be a mobile phone (mobile phone), a tablet computer (Pad), a computer having a wireless transceiver function, a mobile internet device (mobile internet device, MID), a wearable device, a virtual reality (virtual reality, VR) terminal device, an augmented reality (augmented reality, AR) terminal device, a wireless terminal in industrial control (industrial control), a wireless terminal in self driving (self driving), a wireless terminal in remote medical (remote medical), a wireless terminal in smart grid (smart grid), a wireless terminal in transportation safety (transportation safety), a wireless terminal in smart city (smart city), a wireless terminal in smart home (smart home), an uncrewed aerial vehicle, or an uncrewed aerial vehicle controller. An application scenario is not limited in embodiments of this application. The terminal device also includes a device that can perform sidelink (sidelink) communication, for example, a vehicle-mounted terminal, or a handheld terminal that can perform V2X (vehicle-to-everything, vehicle-to-everything) communication.

The access network device is a radio access network (radio access network, RAN) node (or device) that connects a terminal to a wireless network, and may also be referred to as a base station, for example, may be various types of base stations such as an NR gNB or an LTE eNB. The NR gNB may use an architecture in which a central unit CU and a distributed unit DU are split. As shown in the access network device in FIG. 1, the CU and the DU are connected through an F1 interface for message transmission. Usually, the terminal device maintains a data connection to only one access network device at a same moment. In a dual connectivity (Dual Connectivity, DC) scenario, the terminal device may be connected to two access network devices at the same time. One access network device serves as a control anchor, provides a control plane connection and a user plane connection for the terminal, and is referred to as a primary access network device. The other access network device provides only a user plane connection for the terminal, and is referred to as a secondary access network device. This application may be applied to a DC scenario, or may not be applied to a DC scenario.

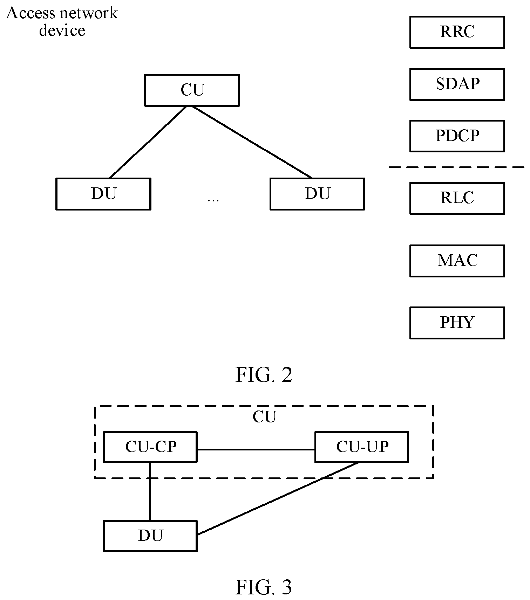

FIG. 2 is a diagram of a CU-DU split architecture of an access network device according to an embodiment of this application.

The RAN device includes a baseband apparatus and a radio frequency apparatus. The baseband apparatus may be implemented by one node, or may be implemented by a plurality of nodes. The radio frequency apparatus may be independently implemented by being disposed remotely from the baseband apparatus, or may be integrated into the baseband apparatus. Alternatively, a part of functions of the radio frequency apparatus are independently integrated, and a part of functions of the radio frequency apparatus are integrated into the baseband apparatus. For example, in an LTE communication system, the RAN device includes a baseband apparatus and a radio frequency apparatus. The radio frequency apparatus may be disposed remotely relative to the baseband apparatus. For example, an RRU is a remote radio unit disposed relative to a BBU.

Communication between the RAN device and the terminal device complies with a specific protocol layer structure. For example, a control plane protocol layer structure may include functions of protocol layers such as a radio resource control (radio resource control, RRC) layer, a packet data convergence protocol (packet data convergence protocol, PDCP) layer, a radio link control (radio link control, RLC) layer, a media access control (media access control, MAC) layer, and a physical layer. A user plane protocol layer structure may include functions of protocol layers such as the PDCP layer, the RLC layer, the MAC layer, and the physical layer. In a possible implementation, a service data adaptation protocol (service data adaptation protocol, SDAP) layer may be further included above the PDCP layer.

The RAN device may implement the functions of the protocol layers such as the RRC layer, the PDCP layer, the RLC layer, and the MAC layer by using one node, or may implement the functions of these protocol layers by using a plurality of nodes. For example, in an evolved structure, the RAN device may include a CU and a DU, and a plurality of DUs may be centrally controlled by one CU. As shown in FIG. 2, in a split deployment scenario in which the access network device includes the CU and the DU, the CU supports functions of protocol layers such as a radio resource control RRC layer, a packet data convergence protocol PDCP layer, and a service data adaptation protocol SDAP layer, and the DU mainly supports functions of protocol layers such as a radio link control RLC layer, a media access control MAC layer, and a physical layer.

Division at the protocol layer is merely an example, and division may alternatively be performed at another protocol layer. For example, division is performed at the RLC layer. Functions of the RLC layer and protocol layers above the RLC layer are set on the CU, and functions of protocol layers below the RLC layer are set on the DU. Alternatively, division is performed in a protocol layer. For example, a part of functions of the RLC layer and functions of the protocol layers above the RLC layer are set on the CU, and a remaining function of the RLC layer and functions of the protocol layers below the RLC layer are set on the DU. In addition, division may alternatively be performed in another manner. For example, division is performed based on a delay. A function whose processing time needs to meet a delay requirement is set on the DU, and a function whose processing time does not need to meet the delay requirement is set on the CU.

In addition, the radio frequency apparatus may be independently integrated, not placed in the DU, or may be integrated in the DU. Alternatively, a part of the radio frequency apparatus may be remotely integrated in the DU. This is not limited herein.

FIG. 3 is a diagram of another network architecture to which an embodiment of this application is applicable. Compared with those in the network architecture shown in FIG. 2, in FIG. 3, a CP and a UP of a CU may be further split and implemented by different entities, which are respectively a CU-CP entity and a CU-UP entity.

In the foregoing network architecture, signaling generated by the CU may be sent to a terminal device through a DU, or signaling generated by the terminal device may be sent to the CU through the DU. The DU may transparently transmit the signaling to the terminal device or the CU by directly encapsulating the signaling at a protocol layer without parsing the signaling. In the following embodiments, if such signaling is transmitted between the DU and the terminal device, sending or receiving of the signaling by the DU includes this scenario. For example, signaling of an RRC or a PDCP layer is eventually processed as signaling of a PHY layer, to be sent to the terminal device, or is converted from received signaling of the PHY layer. In this architecture, it may also be considered that the signaling of the RRC layer or the PDCP layer is sent by the DU, or sent by the DU and radio frequency loading.

The network architecture shown in FIG. 1, FIG. 2, or FIG. 3 is applicable to communication systems of various radio access technologies (radio access technologies, RATs), for example, may be an LTE communication system, or may be a 5G communication system, or may be a transition system between the LTE communication system and the 5G communication system. The transition system may also be referred to as a 4.5G communication system, or certainly may be a future communication system.

A core network device is a device in a core network (core network, CN) that provides service support for a terminal. Currently, some examples of the core network device are an access and mobility management function (access and mobility management function, AMF) entity, a session management function (session management function, SMF) entity, a user plane function (user plane function, UPF) entity, and the like, which are not listed one by one herein. The AMF entity may be responsible for access management and mobility management of the terminal. The SMF entity may be responsible for session management, for example, session establishment of a user. The UPF entity may be a functional entity on a user plane, and is mainly responsible for a connection to an external network. It should be noted that, the entity in this application may also be referred to as a network element or a functional entity. For example, the AMF entity may also be referred to as an AMF network element or an AMF functional entity. For another example, the SMF entity may also be referred to as an SMF network element or an SMF functional entity.

A network architecture and a service scenario described in embodiments of this application are intended to describe the technical solutions in embodiments of this application more clearly, and do not constitute a limitation on the technical solutions provided in embodiments of this application. A person of ordinary skill in the art may know that with evolution of communication network architectures and emergence of new service scenarios, the technical solutions provided in embodiments of this application are also applicable to similar technical problems. For example, this application is applicable to an XR service scenario.

It should be understood that the network architectures shown in FIG. 1 to FIG. 3 are merely examples for description, and do not have any limitation function. Embodiments of this application are further applicable to another network architecture. For example, an access network device and a core network are not distinguished, that is, the access network and the core network may belong to a same network device. The network device communicates with the terminal device; or the terminal device communicates with another terminal device.

For ease of understanding of the solutions in embodiments of this application, the following describes in detail technical terms in embodiments of this application.

### 1. NR protocol architecture

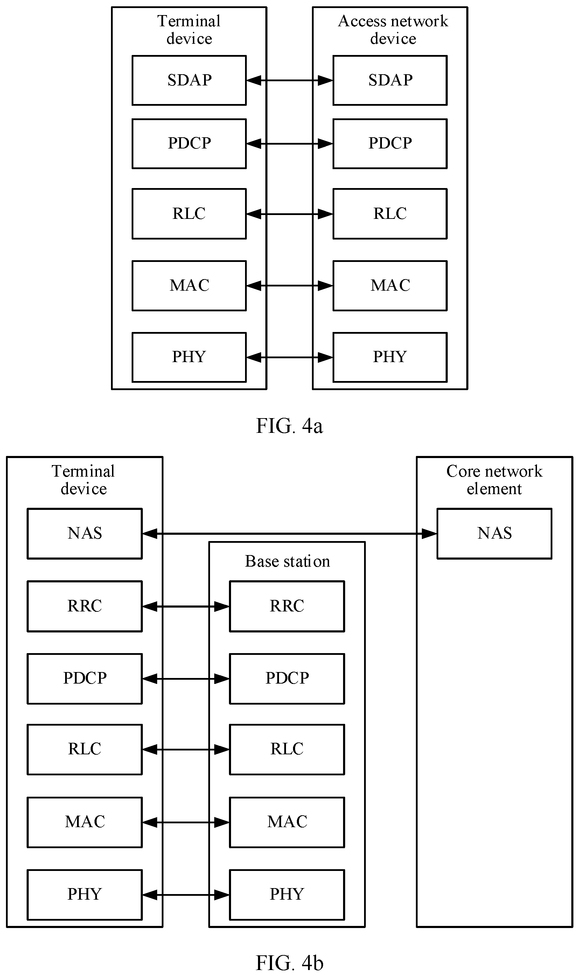

An NR protocol architecture in embodiments of this application may be classified into a user plane protocol stack and a control plane protocol stack. The following describes the foregoing two protocol stacks with reference to FIG. 4a and FIG. 4b.

FIG. 4a and FIG. 4b each are a diagram of a protocol stack according to an embodiment of this application. FIG. 4a and FIG. 4b are described by using interaction between a terminal device and an access network device as an example, where FIG. 4a shows the user plane protocol stack, and FIG. 4b shows the control plane protocol stack.

The user plane protocol stack is a protocol suite used for user data transmission. As shown in FIG. 4a, the user plane protocol stack may include five layers: a PHY layer, a MAC layer, an RLC layer, a PDCP layer, and an SDAP layer.

An architecture of the control plane protocol stack is a protocol suite used for control signaling transmission of a system. As shown in FIG. 4b, the control plane protocol stack may include a non-access stratum (non-access stratum, NAS), an RRC layer, a PDCP layer, an RLC layer, a MAC layer, and a PHY layer.

For example, the PHY layer may be responsible for one or more of encoding and decoding, modulation and demodulation, multi-antenna mapping, and another physical layer function. For example, the MAC layer may be responsible for one or more of a hybrid automatic repeat request (hybrid automatic repeat request, HARQ), uplink scheduling, downlink scheduling, and the like. For example, the RLC layer may be responsible for one or more of segmentation, reassembly, retransmission processing, and the like. For example, the PDCP layer may be responsible for one or more of header compression/decompression, security (an encryption function and an integrity protection function), retransmission, in-order delivery, and the like. For example, the RRC layer may be responsible for one or more of functions such as broadcast, paging, RRC connection management, radio bearer control, mobility management, and terminal device measurement reporting and control. For example, the NAS layer may be responsible for one or more of functions such as identity verification, mobility management, and security control.

For the user plane protocol stack, the NR protocol stack has an additional SDAP layer compared with an LTE protocol stack. For the control plane protocol stack, the NR protocol stack is similar to the LTE protocol stack.

Optionally, in this embodiment of this application, each layer in the protocol stack may be replaced with an entity. For example, the PDCP layer may be replaced with a PDCP entity, and the SDAP layer may be replaced with an SDAP entity. Unified descriptions are provided herein. Details are not described below again.

### 2. PDU set (PDU set)

A PDU set is a set including a plurality of data packets at a transport layer, and corresponds to a minimum granularity for data processing at an application layer. In some application scenarios, the application layer can correctly parse a corresponding data unit only after correctly receiving all data packets in the PDU set. In some other application scenarios, the application layer can parse a corresponding data unit after correctly receiving a specific proportion of data packets in the PDU set.

### 3. XR service

Extended reality (extended reality, XR) refers to various real-virtual combined environments generated by computing technologies and wearable devices, and human-machine interaction. The XR specifically includes the following typical forms: AR, VR, and mixed reality (Mixed Reality, MR).

In the 3rd generation partnership project (3rd generation partnership project, 3GPP) Rel-17, modeling and analysis are performed on XR service features. Usually, XR services periodically generate data frames at a specific frame rate. An AR service with a frame rate of 60 fps (frames per second, frames per second) is used as an example. 60 frames of video images are generated per second, and one video frame appears about every 16.67 ms. One video frame may be transmitted by using a plurality of data packets, and the plurality of data packets may be grouped into one or more PDU sets.

### 4. PDU set importance (PDU set importance, PSI)

In an XR service, PDU sets of different importance may exist in a same QoS flow. This is caused by coding modes of an application. For example, for an XR video service, an application may use an inter-frame predictive coding mode for some video frames during data coding, to reduce an amount of data to be transmitted. Simply speaking, this coding mode is to transmit only data of a changed part in adjacent video pictures based on a fact that most content in the pictures does not change, and directly use previous data for an unchanged part. For example, in live video pictures, because a background usually does not change, complete data needs to be transmitted only when a 1^{st} frame of a video is transmitted, and only data of a foreground person change needs to be transmitted in a subsequent video frame. Background data does not need to be transmitted again, and a player at a receive end may directly use background data of the 1^{st} frame to generate a picture of the subsequent video frame.

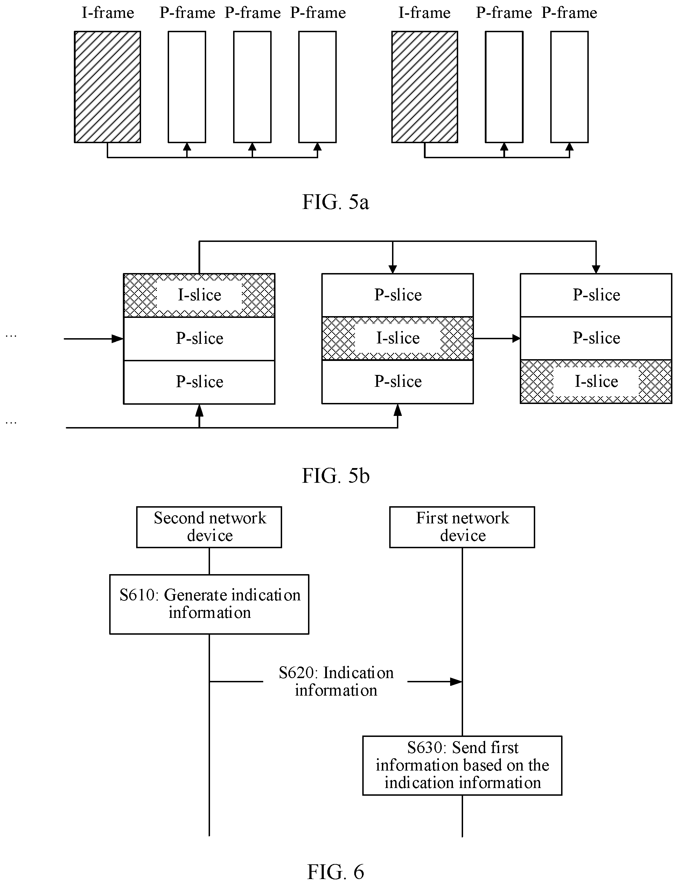

FIG. 5a and FIG. 5b each are a diagram of a coding model according to an embodiment of this application. As shown in FIG. 5a, a classic coding mode is a coding model based on a group of pictures (group of pictures, GOP). Specifically, one GOP includes several consecutive video frames, and a 1^{st} frame is referred to as an intra-coded frame (intra-coded picture), which is referred to as an I-frame for short. The I-frame is intra-coded, includes complete picture information, and can be independently coded and decoded. Other frames in the GOP are referred to as forward predictive-coded frames (predictive-coded pictures), which are referred to as P-frames for short. The P-frames are predictive-coded, include only a part of picture information, and only can be encoded and decoded by using the I-frame.

As shown in FIG. 5b, in another slice-based coding model, one video frame is divided into a plurality of video slices (slices), some slices are intra-coded (referred to as I-slices, that is, I-slices), and some slices are predictive-coded (referred to as P-slices, that is, P-slices). Encoding and decoding of a P-slice in a latter frame need to depend on an I-slice in a corresponding position in a former frame.

It should be understood that one frame or one slice may correspond to one or more PDU sets when being transmitted in a wireless network.

The coding model of an XR video reflects unequal importance of data. Correct decoding of a P-frame or a P-slice depends on correct decoding of an I-frame or an I-slice. Therefore, I-frame or I-slice data has higher importance in a data transmission process. During network congestion, reliable transmission of the I-frame or the I-slice should be preferentially ensured, to ensure service experience. In 3GPP, PSI identifies importance of different data. The PSI may include 16 levels, and a value range is 0 to 15. A smaller PSI value indicates higher importance of a PDU set.

For example, in an XR video stream, PSI of a PDU set corresponding to an I-frame or an I-slice may be less than PSI of a PDU set corresponding to a P-frame or a P-slice. Because encoding and decoding of the P-frame or the P-slice need to depend on the I-frame or the I-slice, I-frame or I-slice data has higher importance.

Specifically, for downlink transmission, PSI of each PDU set is transmitted by a core network to an access network device. For uplink transmission, PSI of each PDU set is identified by a terminal device.

Currently, packet discarding behavior of a PDCP layer is specified in 3GPP. Specifically, when a PDCP layer of a transmit end (for example, an access network device) receives a PDCP service data unit (service data unit, SDU) from an upper layer (for example, an SDAP layer), a discard timer (denoted as a discard timer) is started for the PDCP SDU. When the discard timer expires, the PDCP layer discards the PDCP SDU corresponding to the discard timer and a PDCP PDU corresponding to the PDCP SDU. If the PDCP PDU has been delivered to a lower layer (for example, an RLC layer), the PDCP layer further notifies the lower layer of a packet discard indication, and the lower layer performs a corresponding packet discard operation.

Duration of the discard timer is configured by a network, and specifically, is configured by using RRC signaling. One piece of duration may be configured for one PDCP layer. For all data packets processed at the PDCP layer, duration of a discard timer may be of a same length. Usually, the network may configure the discard timer based on a packet delay budget (packet delay budget, PDB) of data or a PDU set delay budget (PDU set delay budget, PSDB).

To support XR services and reflect unequal importance of data in the XR services, 3GPP enhances a PDCP packet discarding mechanism. In other words, in addition to the foregoing discard timer, the access network device may further additionally configure a discard timer for a PDCP layer of a terminal device. The additional discard timer may also be referred to as a discard timer for low importance. When network congestion occurs, the access network device may send indication information to the terminal device, to indicate the terminal device to activate the discard timer for low importance. After the discard timer for low importance of the terminal device is activated, if the PDCP layer of the terminal device receives a PDCP SDU from an upper layer, and the PDCP SDU is a low importance data packet (for example, the PDCP SDU belongs to a PDU set with large PSI), the terminal device chooses to start the discard timer for low importance for the PDCP SDU instead of a conventional discard timer. When the discard timer for low importance expires, the PDCP SDU is discarded.

That the access network device additionally configures the discard timer for the PDCP layer of the terminal device may also be understood as that the access network device additionally configures duration of a discard timer for the PDCP layer of the terminal device, and the duration is denoted as discard duration for low importance. When network congestion occurs, that the access network device sends the indication information to the terminal device to indicate the terminal device to activate the discard timer for low importance may also be understood as that the access network device sends the indication information to the terminal device to indicate the terminal device to adjust duration of the discard timer for low importance data from conventionally configured duration to the additionally configured discard duration for low importance. In this manner, when the PDCP layer of the terminal device receives the low importance data packet from the upper layer subsequently, the existing discard timer is still started, but duration of the existing discard timer is adjusted duration, that is, discard duration for low importance, instead of original duration of the discard timer. For ease of naming, the discard timer whose duration is adjusted may also be referred to as a discard timer for low importance.

When the duration of the discard timer for low importance is shorter than the duration of the conventional discard timer, the timer for low importance is activated during network congestion, so that a low importance data packet is preferentially discarded. In this way, limited network resources can be allocated to data of higher importance, and differentiated assurance is provided for data of different importance. After the network congestion is relieved, network resources are sufficient, and the access network device may further indicate the terminal device to deactivate the discard timer for low importance. In this way, a discard timer of same duration is used for low importance data and high importance data, and no differentiated processing is performed.

To ensure normal running of the discard timer for low importance, the access network device needs to first configure the discard timer for low importance (for example, by using RRC signaling), and detect a congestion status of a network. When detecting that network congestion exists, the access network device outputs activation indication information, to activate the discard timer for low importance (for example, to perform indication by using a medium access control control element (medium access control control element, MAC CE)). For a CU-DU split network architecture of the access network device, configuring the discard timer for low importance is performed by the CU, and specifically, may be performed by an RRC layer of the CU. Detecting network congestion or relieving network congestion and indicating the terminal device to activate or deactivate the discard timer for low importance are performed by the DU, and specifically, may be implemented by using a MAC CE at a MAC layer of the DU.

In the CU-DU split architecture of the access network device, because the CU and the DU have different responsibilities for running the discard timer for low importance, the DU may fail to detect a network state in time and fail to output activation or deactivation of the discard timer for low importance. As a result, the discard timer for low importance cannot run normally. Therefore, when the access network device is in the CU-DU split architecture, how to ensure normal running of the discard timer for low importance is an urgent problem to be resolved.

For the foregoing problem, embodiments of this application provide a communication method and apparatus. The following provides detailed descriptions with reference to FIG. 6 to FIG. 12.

FIG. 6 is an interaction diagram of a communication method according to an embodiment of this application. It may be understood that in this application, an example in which a first network device and a second network device are execution bodies of the illustrated interaction is used to illustrate corresponding methods. However, an execution body of the illustrated interaction is not limited in this application. For example, a method implemented by the first network device may alternatively be implemented by a module (for example, a chip, a chip system, or a processor) of the first network device, or may be implemented by a logical node, a logical module, or software that can implement all or some functions of the first network device. For another example, a method implemented by the second network device may alternatively be implemented by a module (for example, a chip, a chip system, or a processor) of the second network device, or may be implemented by a logical node, a logical module, or software that can implement all or some functions of the second network device.

S610: The second network device generates indication information, where the indication information indicates that a first discard timer for low importance is configured for a terminal device, and the first discard timer for low importance is used to control discarding of low importance data.

It may also be understood as that the indication information indicates that the second network device configures the first discard timer for low importance for data transmission of the terminal device.

The low importance data may be understood as a PDU set whose PSI is greater than preset PSI or a PDU included in the PDU set. The preset PSI may be predefined in a protocol, or may be determined by the second network device or the terminal device, or may be indicated by the second network device to the terminal device. Alternatively, the low importance data may be understood as a PDU set or a data burst whose sum of data amounts is less than a preset data amount. The sum of data amounts of the PDU set is a sum of sizes of all PDUs included in the PDU set. The sum of data amounts of the data burst is a sum of sizes of all data packets in the data burst. The preset data amount may be predefined in a protocol, or may be determined by the second network device or the terminal device, or may be indicated by the second network device to the terminal device. It should be understood that the low importance data is data of relatively low importance in a same data flow or a same PDCP entity. The second network device and the terminal device may determine relative importance of the data by using the foregoing method based on the PSI or the data amount, or may determine relative importance of the data in another manner. This is not limited in this application.

The first discard timer for low importance (discard timer for low importance) may also be referred to as a PSI-based discard timer (PSI-based discard timer), that is, the discard timer is a discard timer for data importance.

In a possible implementation, the indication information may further indicate that an initial state of the first discard timer for low importance is an active state or an inactive state.

In a possible implementation, the indication information may specifically indicate a first data radio bearer DRB corresponding to the first discard timer for low importance.

The first DRB corresponding to the first discard timer for low importance may also be understood as a first PDCP entity corresponding to the first discard timer for low importance, and the first DRB corresponds to the first PDCP entity.

In other words, the indication information may not only indicate that the first discard timer for low importance is configured for the terminal device, but also indicate specific DRBs corresponding to data for which the first discard timer for low importance is configured in the terminal device. A quantity of first DRBs is not limited in this embodiment of this application.

In a possible implementation, the indication information may further indicate duration of the first discard timer for low importance.

The duration of the first discard timer for low importance may be duration of the first discard timer for low importance for the first DRB of the terminal device.

It should be understood that different content that may be indicated by the indication information may be carried in a same message, or may be carried in different messages.

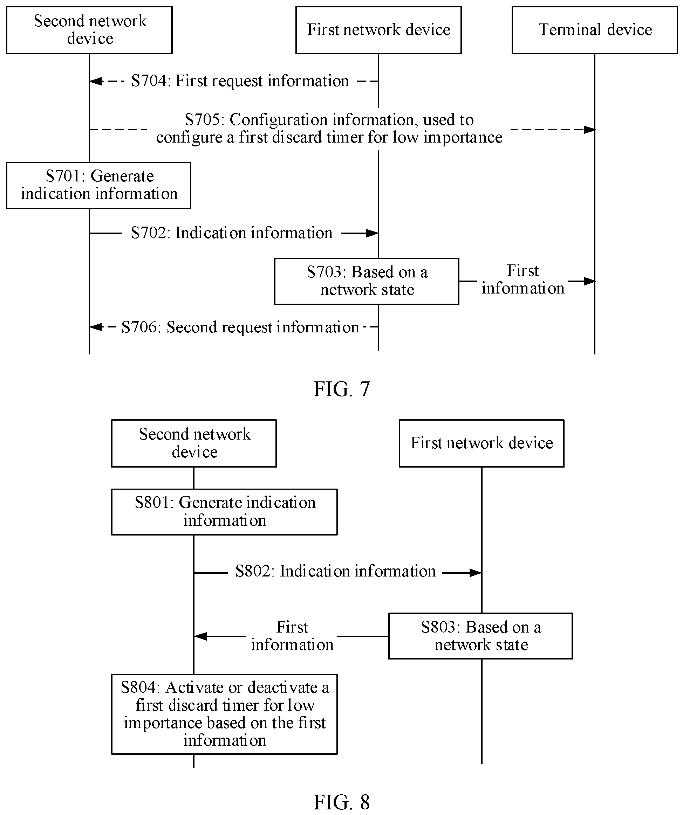

Specifically, the indication information indicates that the first discard timer for low importance is configured for uplink data of the terminal device. In this case, that the second network device configures the first discard timer for low importance for the terminal device means that the terminal device is configured to maintain the first discard timer for low importance. Alternatively, the indication information indicates that the first discard timer for low importance is configured for downlink data of the terminal device. In this case, the second network device is configured to maintain the first discard timer for low importance for the downlink data of the terminal device. The two cases are respectively described in detail in FIG. 7 and FIG. 8 below.

It should be understood that the second network device may be a network device that configures the first discard timer for low importance for data transmission of the terminal device. For example, the second network may be a central unit CU in an access network device. For another example, if the CU is in a CP-UP split structure, the second network device may alternatively be a CU-CP. The first network device may be a network device configured to detect a network state, for example, a distributed unit DU in the access network device.

S620: The second network device sends the indication information to the first network device, and the first network device receives the indication information from the second network device.

In other words, when the second network device configures the first discard timer for low importance for any PDCP entity of the terminal device, the second network device may send the indication information to the first network device.

Specifically, the indication information may be carried in a message like a UE context setup request message (UE CONTEXT SETUP REQUEST) or a UE context modification request message (UE CONTEXT MODIFICATION REQUEST).

S630: The first network device sends first information based on the network state, where the first information is used to determine whether to activate the first discard timer for low importance.

It should be understood that the network state may be that congestion exists, or may be that congestion does not exist. That congestion does not exist may be understood as that network congestion is relieved, or may be understood as that network congestion does not occur.

Specifically, when the network state is congested, the first information is sent, where the first information is used to determine to activate the first discard timer for low importance. Alternatively, when the network state is not congested, the first information is sent, where the first information is used to determine to deactivate the first discard timer for low importance.

In a possible implementation, the first network device sends the first information to the terminal device based on the network state.

It should be understood that in this implementation, the indication information in S610 specifically indicates that the first discard timer for low importance is configured for the uplink data of the terminal device. A specific case is described in detail in FIG. 7.

In a possible implementation, the first network device sends the first information to the second network device based on the network state.

It should be understood that, in this implementation, the indication information in S610 specifically indicates that the first discard timer for low importance is configured for the downlink data of the terminal device. A specific case is described in detail in FIG. 8.

In the foregoing technical solution, the first network device may learn of a status of configuring, by the second network device, the first discard timer for low importance for the terminal device, may detect the network state in time, and send, based on the network state, the first information used to determine whether to activate the first discard timer for low importance. In this way, during network congestion, a device that maintains the first discard timer for low importance may discard low importance data in time, so that network transmission pressure can be relieved in time without affecting transmission of important data.

FIG. 7 is an interaction diagram of another communication method according to an embodiment of this application. Execution bodies in FIG. 7 may include a second network device, a first network device, and a terminal device. For a specific case, refer to related descriptions of FIG. 6. Details are not described herein again.

S701: The second network device generates indication information, where the indication information indicates that a first discard timer for low importance is configured for uplink data of a terminal device, and the first discard timer for low importance is used to control discarding of low importance data.

It should be understood that, for some explanations of the indication information, refer to S610. Details are not described herein again.

S702: The second network device sends the indication information to the first network device, and the first network device receives the indication information from the second network device.

When the first network device is a DU, and the second network device is a CU, the indication information may be directly sent by the CU to the DU. Alternatively, when the CU is in a CP-UP split structure, the indication information may be sent by a CU-CP to the DU.

S703: The first network device sends first information to the terminal device based on a network state, and the terminal device receives the first information.

Specifically, the first network device monitors a network, and sends the first information to the terminal device when the network state is congested, where the first information is used to determine to activate the first discard timer for low importance. Alternatively, the first network device monitors a network, and sends the first information to the terminal device when the network state is not congested, where the first information is used to determine to deactivate the first discard timer for low importance.

When the indication information does not indicate an initial state of the first discard timer for low importance, the first network device may consider by default that the initial state of the first discard timer for low importance is an inactive state (in other words, the first network device considers by default that the initial state of the first timer for low importance corresponding to a first DRB is the inactive state). The first network device monitors a network, and sends the first information to the terminal device when the network state is congested, where the first information is used to determine to activate the first discard timer for low importance. The inactive state may also be referred to as a deactivated state. This is not limited in this embodiment of this application.

When the indication information does not indicate an initial state of the first discard timer for low importance, the first network device may consider by default that the initial state of the first discard timer for low importance is an active state (in other words, the first network device considers by default that the initial state of the first timer for low importance corresponding to a first DRB is the active state). The first network device monitors a network, and sends the first information to the terminal device when the network state is not congested, where the first information is used to determine to deactivate the first discard timer for low importance.

Correspondingly, the terminal device may activate or deactivate the first discard timer for low importance based on the first information.

Specifically, the terminal device may directly accept information that is for activating or deactivating the first discard timer for low importance and that is determined based on the first information, and perform a corresponding operation. Alternatively, the terminal device may determine, based on a situation of the terminal device, for example, whether low importance data exists and a data amount of the low importance data, whether to activate the first discard timer for low importance.

Before S701, the following steps may be further included.

Optionally, in S704, the first network device sends first request information to the second network device, where the first request information is used to request to configure the first discard timer for low importance for the uplink data of the terminal device.

In other words, sending of the indication information in S701 may be triggered by using the first request information in S704.

In a possible implementation, the first request information may be specifically used to request to configure the first discard timer for low importance for uplink data related to the first DRB of the terminal device.

In a possible implementation, the first request information may be further used to request the initial state of the first discard timer for low importance, and the initial state may be the active state or the inactive state.

In a possible implementation, the first request information may be further used to request duration of the first discard timer for low importance.

Optionally, when detecting that network congestion exists, the first network device may send the first request information to the second network device.

The first network device may detect the network when receiving other request information related to the network state. Alternatively, the first network device may periodically detect the network state.

Optionally, in S705, the second network device may send configuration information to the terminal device, and the terminal device receives the configuration information from the second network device, where the configuration information is used to configure the first discard timer for low importance for the uplink data of the terminal device.

Optionally, the configuration information may include the duration of the first discard timer for low importance. The configuration information may further include the initial state of the first discard timer for low importance, where the initial state is the active state or the inactive state.

Correspondingly, the terminal device may obtain the first discard timer for low importance independent of a discard timer, or the terminal device may update duration of a discard timer corresponding to the low importance data to the duration of the first discard timer for low importance.

Optionally, the second network device may further send a response message of the first request information to the first network device, where the response message indicates that the second network device receives or rejects the first request information.

Specifically, when the response message indicates that the second network device accepts the first request information, the response message may also be referred to as an accept response message.

Optionally, the indication information may be carried in the accept response message.

When the response message indicates that the second network device rejects the first request information, the response message may also be referred to as a reject response message.

After S703, the following step may be further performed.

Optionally, in S706, the first network device sends second request information to the second network device, where the second request information is used to request to configure a second discard timer for low importance for uplink data related to a second DRB of the terminal device.

It should be understood that, if the first network device detects that the network is still in a congested state after S703, to be specific, after the first discard timer for low importance is configured for the uplink data related to the first DRB as requested by using the first request information in S704, if network congestion is not relieved after the first information in S703 is used to determine to activate the first discard timer for low importance and the terminal device discards the uplink data related to the first DRB, S706 may be performed.

The first discard timer for low importance and the second discard timer for low importance correspond to different DRBs, that is, correspond to different PDCP entities.

In the foregoing technical solution, the first network device learns that the second network device configures the first discard timer for low importance for the uplink data of the terminal device, and the first network device may detect the network in time, so as to send, to the terminal device based on the network state, the first information about activating or deactivating the first discard timer for low importance, so that the terminal device can use the first discard timer for low importance in time, thereby relieving transmission pressure of the uplink data.

FIG. 8 is an interaction diagram of still another communication method according to an embodiment of this application. Execution bodies in FIG. 8 may include a second network device and a first network device. For a specific case, refer to related descriptions of FIG. 6. Details are not described herein again.

S801: The second network device generates indication information, where the indication information indicates that a first discard timer for low importance is configured for downlink data of a terminal device, and the first discard timer for low importance is used to control discarding of low importance data.

In other words, the second network device is configured to maintain the first discard timer for low importance.

It should be understood that, for some explanations of the indication information, refer to S610. Details are not described herein again.

S802: The second network device sends the indication information to the first network device, and the first network device receives the indication information from the second network device.

When the first network device is a DU, and the second network device is a CU, the indication information may be directly sent by the CU to the DU. Alternatively, when the CU is in a CP-UP split structure, the indication information may be sent by a CU-CP to the DU.

When the second network device is a CU, and the CU is in a CP-UP split architecture, as shown in FIG. 3, optionally, before S801, a CU-CP sends first configuration information to a CU-UP, where the first configuration information is used to configure the first discard timer for low importance for the CU-UP.

Specifically, the first configuration information may be carried in a bearer context setup request message (BEARER CONTEXT SETUP REQUEST) or a bearer context modification request message (BEARER CONTEXT MODIFICATION REQUEST). More specifically, the first configuration information may be carried in PDCP configuration information in the foregoing message.

Optionally, the first configuration information may include duration of the first discard timer for low importance. The first configuration information may further include an initial state of the first discard timer for low importance, where the initial state is an active state or an inactive state.

Correspondingly, the CU-UP may obtain the first discard timer for low importance independent of a discard timer, or the CU-UP may update duration of a discard timer corresponding to the low importance data to the duration of the first discard timer for low importance.

S803: The first network device sends first information to the second network device based on a network state, where the first information is used to determine whether to activate the first discard timer for low importance.

In a possible implementation, the first network device monitors a network, and sends the first information to the second network device when the network state is congested, where the first information is used to determine to activate the first discard timer for low importance. Alternatively, the first network device monitors a network, and sends the first information to the second network device when the network state is not congested, where the first information is used to determine to deactivate the first discard timer for low importance.

When the indication information does not indicate the initial state of the first discard timer for low importance, the first network device may consider by default that the initial state of the first discard timer for low importance is an inactive state (in other words, the first network device considers by default that the initial state of the first timer for low importance corresponding to a first DRB is the inactive state). The first network device monitors the network, and sends the first information to the second network device when the network state is congested, where the first information is used to determine to activate the first discard timer for low importance. The inactive state may also be referred to as a deactivated state. This is not limited in this embodiment of this application.

When the indication information does not indicate the initial state of the first discard timer for low importance, the first network device may consider by default that the initial state of the first discard timer for low importance is an active state (in other words, the first network device considers by default that the initial state of the first timer for low importance corresponding to a first DRB is the active state). The first network device monitors the network, and sends the first information to the second network device when the network state is not congested, where the first information is used to determine to deactivate the first discard timer for low importance.

The first information includes at least one of the following information: suggestion information, network congestion degree assistance information, air interface quality assistance information, an expected data amount or an expected rate, and protocol data unit set importance PSI suggestion information.

Specifically, the suggestion information is used to suggest whether to activate the first discard timer for low importance. Alternatively, the suggestion information is used to suggest whether the first discard timer for low importance should be activated. For example, when detecting that network congestion exists, the first network device may send the suggestion information for activating the first discard timer for low importance to the second network device. Correspondingly, when the first network device detects that the network is not congested (for example, the network is relieved from a congested state), the first network device may send the suggestion information for deactivating the first discard timer for low importance to the second network device.

The network congestion degree assistance information indicates a network congestion degree. Specifically, the first network device may measure a downlink or uplink congestion status, and report the congestion degree to the second network device. For example, 100% indicates that the network is extremely congested, 50% indicates that the network is moderately congested, and 0% indicates that the network is not congested at all.

The air interface quality assistance information indicates uplink or downlink air interface data transmission quality. Specifically, the first network device measures the uplink or downlink air interface data transmission quality, and reports related information to the second network device. For example, 0 indicates that air interface quality is extremely poor, and 10 indicates that air interface quality is extremely good. Alternatively, the first network device directly reports statistics information that reflects air interface quality, such as an average uplink or downlink channel quality indicator (channel quality indicator, CQI), or a quantity of average uplink or downlink hybrid automatic repeat request (hybrid automatic repeat request, HARQ) retransmissions.

The expected data amount or the expected rate indicates an expected data amount or an expected data transmission rate of an air interface. Specifically, the first network device may estimate, based on consumption of a network resource, how much data can be normally transmitted by the air interface in a next period of time, and send an estimation result, for example, represented as a total quantity of bytes expected to be received in the period of time, to the second network device.

The PSI suggestion information indicates PSI of data corresponding to the discard timer for low importance. Specifically, the first network device may infer, with reference to a congestion status and PSI distribution of to-be-transmitted data, data corresponding to which PSI levels (that is, PSI thresholds) cannot be transmitted in time. For example, if the first network device considers that data whose PSI is greater than 10 cannot be transmitted in time, the first network device sends the information to the second network device, so that the second network device may activate a discard timer for downlink low importance for activating the data whose PSI is greater than 10.

It should be understood that the first information may alternatively be first information corresponding to the first DRB corresponding to the first discard timer for low importance.

When the first network device is a DU, the second network device is a CU, and the CU is in a CP-UP split architecture, as shown in FIG. 3, the DU may directly send the first information to the CU-UP. In this case, the first information may be carried in a packet header of an uplink data packet sent by the DU to the CU-UP, for example, an extension header of a general packet radio system tunneling protocol user (general packet radio system tunneling protocol user, GTP-U) of the data packet.

The DU may alternatively send the first information to the CU-CP, and then the CU-CP sends the first information to the CU-UP. In this case, when the DU sends the first information to the CU-CP, the first information may be carried in a message like a UE context setup response message (UE CONTEXT SETUP RESPONSE), a UE context modification request response message (UE CONTEXT MODIFICATION RESPONSE), or a UE context modification required message (UE CONTEXT MODIFICATION REQUIRED). When the CU-CP sends the first information to the CU-UP, the first information may be carried in a bearer context setup request message (BEARER CONTEXT SETUP REQUEST) or a bearer context modification request message (BEARER CONTEXT MODIFICATION REQUEST).

S804: The second network device activates or deactivates the first discard timer for low importance based on the first information.

In a possible implementation, when the first information includes the suggestion information, the second network device may directly activate or deactivate the first discard timer for low importance based on a suggestion of the suggestion information. Alternatively, the second network device may determine, based on a situation of the second network device, for example, whether low importance data exists and a data amount of the low importance data, whether to activate the first discard timer for low importance.

In a possible implementation, when the first information includes one or more of the network congestion degree assistance information, the air interface quality assistance information, the expected data amount or the expected rate, and the PSI suggestion information, the second network device may determine, with assistance of the first information, to activate or deactivate the first discard timer for low importance. In other words, the first network device provides assistance information of the network state, so that the second network device determines to activate or deactivate the first discard timer for low importance.

In the foregoing technical solution, the first network device learns that the second network device configures the first discard timer for low importance for the downlink data of the terminal device, and the first network device may detect the network in time, to send, to the second network device based on the network state, the first information about activating or deactivating the first discard timer for low importance, so that the second network device can use the first discard timer for low importance in time, thereby relieving transmission pressure of the downlink data.

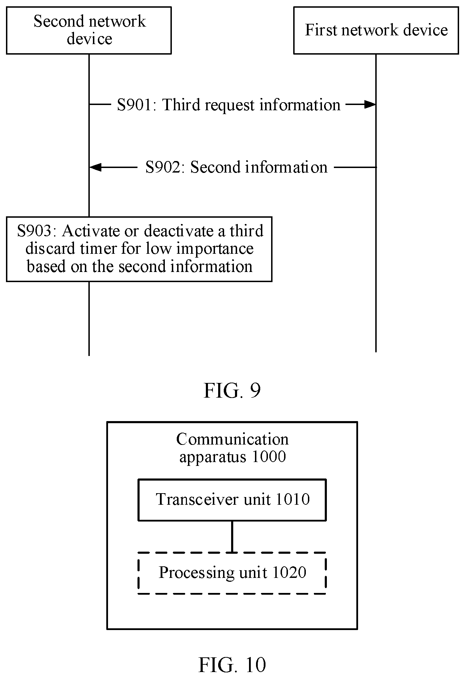

FIG. 9 is an interaction diagram of yet another communication method according to an embodiment of this application. Execution bodies in FIG. 9 may include a second network device and a first network device. For a specific case, refer to related descriptions of FIG. 6. Details are not described herein again.

S901: The second network device sends third request information to the first network device, and the first network device receives the third request information from the second network device, where the third request information is used to request parameter information related to a network state.

In a possible implementation, the third request information may be request information for requesting a congestion degree.

In a possible implementation, the third request information may be request information for requesting air interface quality.

In a possible implementation, the third request information may be request information for requesting an expected data amount or an expected rate.

S902: The first network device sends second information to the second network device, and the second network device receives the second information from the first network device, where the second information is used to determine whether to activate a third discard timer for low importance, and the third discard timer for low importance is used to control discarding of low importance data in downlink data.

It should be understood that, for explanations of the low importance data, refer to S610. For the third discard timer for low importance, refer to the descriptions of the first discard timer for low importance of S610. Details are not described herein again.

The second information may include at least one of the following information: network congestion degree assistance information, air interface quality assistance information, and an expected data amount or an expected rate.

It should be understood that, for detailed explanations of the information, refer to S803. Details are not described herein again.

In a possible implementation, the first network device is a DU, and the second network device is a CU. Specifically, for a detailed transmission process between the first network device and the second network device in S901 and S902, refer to related descriptions of S802 and S803. Details are not described herein again.

S903: The second network device activates or deactivates the third discard timer for low importance based on the second information.

Specifically, when the second information includes one or more of the network congestion degree assistance information, the air interface quality assistance information, and the expected data amount or the expected rate, the second network device may determine, with assistance of the second information, to activate or deactivate the third discard timer for low importance. In other words, the first network device provides the assistance information of the network state, so that the second network device determines to activate or deactivate the third discard timer for low importance.

In the foregoing technical solution, the second network device may learn, by using a request and a response that are about the network state and that are between the first network device and the second network device, that the network state is congested or not congested, or that a network transmission capability is sufficient or insufficient. This helps the second network device determine to activate or deactivate the third discard timer for low importance, so that the second network device can use the third discard timer for low importance in time, to relieve transmission pressure of the downlink data.

The communication methods provided in embodiments of this application are described above in detail with reference to FIG. 6 to FIG. 9. It may be understood that, to implement the foregoing functions, corresponding hardware structures and/or software modules for performing the functions are included.

A person skilled in the art may be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraint conditions of the technical solutions. A person skilled in the art may use different methods to implement the described functions for the particular application, but it should not be considered that the implementation goes beyond the scope of this application.

Communication apparatuses provided in embodiments of this application are described below with reference to FIG. 10 to FIG. 12. It should be understood that descriptions of apparatus embodiments correspond to the descriptions of the method embodiments. Therefore, for content that is not described in detail, refer to the foregoing method embodiments. For brevity, details of a part of content are not described again.

FIG. 10 is a diagram of a communication apparatus 1000 according to an embodiment of this application. The apparatus 1000 may include a transceiver unit 1010. The transceiver unit 1010 may implement a corresponding communication function. The transceiver unit 1010 may also be referred to as a communication interface, a communication unit, or an interface unit. Optionally, the apparatus 1000 may further include a processing unit 1020, and the processing unit 1020 is configured to process data. It should be understood that unless otherwise specified, or if operations such as sending and receiving in this application do not contradict an actual function or internal logic of the operations in related descriptions, the operations may be more generally understood as operations such as outputting and inputting, instead of operations of sending and receiving directly performed by a radio frequency circuit and an antenna.

Optionally, the apparatus 1000 may further include a storage unit. The storage unit may be configured to store instructions and/or data. The processing unit 1020 may read the instructions and/or the data in the storage unit, so that the apparatus implements the foregoing method embodiments.

The apparatus 1000 may be configured to perform an action performed by the first network device in the foregoing method embodiments. In this case, the apparatus 1000 may be a communication device or a component that can be configured in the communication device. The transceiver unit 1010 is configured to perform a receiving and sending-related operation of the first network device in the foregoing method embodiments. The processing unit 1020 is configured to perform a processing-related operation of the first network device in the foregoing method embodiments.

In a design, the apparatus 1000 is configured to perform an action performed by the first network device in a handover process of a terminal device in the method embodiments shown in FIG. 6 to FIG. 8. An execution body may be a chip, a chip system, or a processor that supports the first network device in implementing a corresponding method, or may be a logical module or software that can implement all or some functions of the first network device.

Specifically, the transceiver unit 1010 is configured to: receive indication information from a second network device, where the indication information indicates that a first discard timer for low importance is configured for the terminal device, and the first discard timer for low importance is used to control discarding of low importance data; and send first information based on a network state, where the first information is used to determine whether to activate the first discard timer for low importance.

For parts that are not described in detail, refer to the foregoing method embodiments.

In a design, the communication apparatus 1000 is configured to perform an action performed by the second network device in the method embodiments shown in FIG. 6 to FIG. 8. An execution body may be a chip, a chip system, or a processor that supports the second network device in implementing a corresponding method, or may be a logical module or software that can implement all or some functions of the second network device.

Specifically, the processing unit 1020 is configured to generate indication information, where the indication information indicates that a first discard timer for low importance is configured for a terminal device, and the first discard timer for low importance is used to control discarding of low importance data. The transceiver unit 1010 is configured to send the indication information to a first network device.

For parts that are not described in detail, refer to the foregoing method embodiments.

In a design, the communication apparatus 1000 is configured to perform an action performed by the first network device in the method embodiment shown in FIG. 9. An execution body may be a chip, a chip system, or a processor that supports the first network device in implementing a corresponding method, or may be a logical module or software that can implement all or some functions of the first network device.

Specifically, the transceiver unit 1010 is configured to: receive third request information from a second network device, where the third request information is used to request parameter information related to a network state; and send second information to the second network device, where the second information is used to determine whether to activate a third discard timer for low importance, and the third discard timer for low importance is used to control discarding of low importance data in downlink data.

For parts that are not described in detail, refer to the foregoing method embodiments.

In a design, the communication apparatus 1000 is configured to perform an action performed by the second network device in the method embodiment shown in FIG. 9. An execution body may be a chip, a chip system, or a processor that supports the second network device in implementing a corresponding method, or may be a logical module or software that can implement all or some functions of the second network device.

Specifically, the transceiver unit 1010 is configured to: send third request information to a first network device, where the third request information is used to request parameter information related to a network state; and receive second information from the first network device, where the second information is used to determine whether to activate a third discard timer for low importance, and the third discard timer for low importance is used to control discarding of low importance data in downlink data. For parts that are not described in detail, refer to the foregoing method embodiments.

It should be understood that a specific process in which the units perform the foregoing corresponding steps has been described in detail in the foregoing method embodiments. For brevity, details are not described herein again.

The processing unit 1020 in the foregoing embodiment may be implemented by at least one processor or a processor-related circuit. The transceiver unit 1010 may be implemented by a transceiver or a transceiver-related circuit. The storage unit may be implemented by at least one memory.

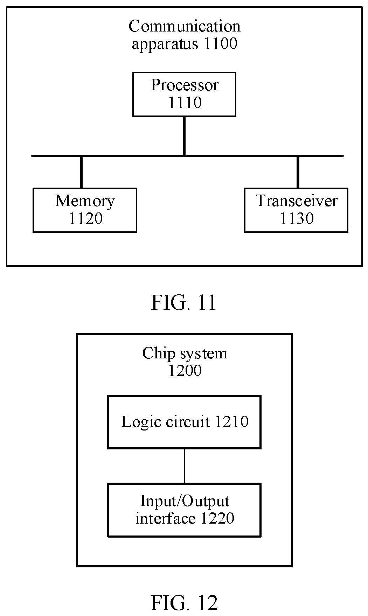

FIG. 11 is a diagram of a structure of a communication apparatus 1100 according to an embodiment of this application.

As shown in FIG. 11, an embodiment of this application further provides a communication apparatus 1100. The apparatus 1100 includes a processor 1110. The processor 1110 is coupled to a memory 1120. The memory 1120 is configured to store a computer program or instructions and/or data. The processor 1110 is configured to execute the computer program or the instructions and/or the data stored in the memory 1120, so that the methods in the foregoing method embodiments are performed.

Optionally, the apparatus 1100 includes one or more processors 1110.

Optionally, as shown in FIG. 11, the apparatus 1100 may further include the memory 1120.

Optionally, the apparatus 1100 may include one or more memories 1120.

Optionally, the memory 1120 and the processor 1110 may be integrated together or disposed separately.

Optionally, as shown in FIG. 11, the apparatus 1100 may further include a transceiver 1130. The transceiver 1130 is configured to receive and/or send signals. For example, the processor 1110 is configured to control the transceiver 1130 to receive and/or send the signals.

In a solution, the apparatus 1100 is configured to implement operations performed by the first network device or the second network device in the foregoing method embodiments.

For example, the processor 1110 is configured to implement a processing-related operation performed by the first network device or the second network device in the foregoing method embodiments, and the transceiver 1130 is configured to implement a receiving and sending-related operation performed by the first network device or the second network device in the foregoing method embodiments.

FIG. 12 is a diagram of a chip system 1200 according to an embodiment of this application. As shown in FIG. 12, the chip system 1200 (or may be referred to as a processing system) includes a logic circuit 1210 and an input/output interface (input/output interface) 1220. The logic circuit is configured to be coupled to the input interface, and transmit a data parameter through the input/output interface, to perform the methods in the foregoing method embodiments. A device in which the chip system 1200 is installed may implement the methods and functions in embodiments of this application. For example, the logic circuit 1210 may be a processing circuit in the chip system 1200, to control the device in which the chip system 1200 is installed, or may be coupled to a storage unit, and invoke instructions in the storage unit, so that the device can implement the methods and functions in embodiments of this application. The input/output interface 1220 may be an input/output circuit in the chip system 1200, to output information processed by the chip system 1200, or input to-be-processed data or signaling information to the chip system 1200 for processing.

In a solution, the chip system 1200 is configured to implement operations performed by the communication apparatus (for example, the first network device or the second network device) in the foregoing method embodiments.

For example, the logic circuit 1210 is configured to implement a processing-related operation performed by the first network device or the second network device in the foregoing method embodiments, and the input/output interface 1220 is configured to implement a receiving and sending-related operation performed by the first network device or the second network device in the foregoing method embodiments.

An embodiment of this application further provides a computer-readable storage medium. The computer-readable storage medium stores computer instructions used to implement the method performed by the communication apparatus (for example, the first network device or the second network device) in the foregoing method embodiments.

For example, when a computer program is executed by a computer, the computer is enabled to implement the method performed by the communication apparatus (for example, the first network device or the second network device) in the foregoing method embodiments.

An embodiment of this application further provides a computer program product including instructions. When the instructions are executed by a computer, the computer is caused to implement the method performed by the communication apparatus (for example, the first network device or the second network device) in the foregoing method embodiments.

An embodiment of this application further provides a communication system. The system includes the first network device and the second network device.

For explanations and beneficial effects of related content in any one of the apparatuses provided above, refer to the corresponding method embodiments provided above. Details are not described herein again.

It should be understood that the processor mentioned in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in embodiments of this application may be a volatile memory and/or a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example and not limitation, the RAM may include the following plurality of forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA, another programmable logic device, a discrete gate or a transistor logic device, or a discrete hardware component, the memory (storage module) may be integrated into the processor.

It should further be noted that the memory described in this specification is intended to include, but is not limited to, these memories and any memory of another appropriate type.

A person of ordinary skill in the art may be aware that, in combination with the examples described in embodiments disclosed in this specification, units and steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the protection scope of this application.

In the several embodiments provided in this application, it should be understood that the disclosed apparatuses and methods may be implemented in other manners. For example, the described apparatus embodiments are merely examples. For example, division into the units is merely logical function division. In actual implementation, there may be another division manner. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one location, or may be distributed on a plurality of network units. Some or all of the units may be selected based on actual requirements to implement the solutions provided in this application.

In addition, functional units in embodiments of this application may be integrated into one unit, or each of the units may exist alone physically, or two or more units may be integrated into one unit.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or another programmable apparatus. For example, the computer may be a personal computer, a server, or a network device. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device like a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive (solid-state drive, SSD)), or the like. For example, the usable medium may include but is not limited to any medium that can store program code, for example, a USB flash drive, a removable hard disk, a read-only memory ROM, a random access memory RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method is applied to a first network device and comprises:
receiving indication information from a second network device, wherein the indication information indicates that a first discard timer for low importance is configured for a terminal device, and the first discard timer for low importance is used to control discarding of low importance data; and
sending first information based on a network state, wherein the first information is used to determine whether to activate the first discard timer for low importance.

2. The method according to claim 1, wherein the indication information further indicates that an initial state of the first discard timer for low importance is an active state or an inactive state.

3. The method according to claim 1 or 2, wherein the indication information specifically indicates a first data radio bearer DRB corresponding to the first discard timer for low importance.

4. The method according to any one of claims 1 to 3, wherein the indication information further indicates duration of the first discard timer for low importance.

5. The method according to any one of claims 1 to 4, wherein the indication information specifically indicates that the first discard timer for low importance is configured for uplink data of the terminal device; and
the sending the first information based on the network state comprises:
sending the first information to the terminal device based on the network state.

6. The method according to claim 5, wherein before the receiving the indication information, the method further comprises:
sending first request information to the second network device, wherein the first request information is used to request to configure the first discard timer for low importance for the uplink data of the terminal device.

7. The method according to claim 6, wherein the first request information is specifically used to request to configure the first discard timer for low importance for uplink data related to the first DRB of the terminal device.

8. The method according to any one of claims 1 to 7, wherein after the sending the first information based on the network state, if the network state is still congested, the method further comprises:
sending second request information to the second network device, wherein the second request information is used to request to configure a second discard timer for low importance for uplink data related to a second DRB of the terminal device.

9. The method according to any one of claims 1 to 4, wherein the indication information specifically indicates that the first discard timer for low importance is configured for downlink data of the terminal device; and
the sending the first information based on the network state comprises:
sending the first information to the second network device based on the network state.

10. The method according to claim 9, wherein the sending the first information to the second network device based on the network state comprises:
when the network state is congested, sending the first information to the second network device, wherein the first information is used to determine to activate the first discard timer for low importance; or
when the network state is not congested, sending the first information to the second network device, wherein the first information is used to determine to deactivate the first discard timer for low importance.

11. The method according to claim 10, wherein the first information comprises at least one of the following information: suggestion information, network congestion degree assistance information, air interface quality assistance information, an expected data amount or an expected rate, and protocol data unit set importance PSI suggestion information, wherein
the suggestion information is used to suggest whether to activate the first discard timer for low importance; the network congestion degree assistance information indicates a network congestion degree; the air interface quality assistance information indicates uplink or downlink air interface data transmission quality; the expected data amount or the expected rate indicates an expected data amount or an expected data transmission rate of an air interface; and the PSI suggestion information indicates PSI of the data corresponding to the first discard timer for low importance.

12. The method according to any one of claims 1 to 11, wherein the first network device is a distributed unit DU, and the second network device is a central unit CU.

13. A communication method, wherein the method is applied to a second network device and comprises:
generating indication information, wherein the indication information indicates that a first discard timer for low importance is configured for a terminal device, and the first discard timer for low importance is used to control discarding of low importance data; and
sending the indication information to a first network device.

14. The method according to claim 13, wherein the indication information further indicates that an initial state of the first discard timer for low importance is an active state or an inactive state.

15. The method according to claim 13 or 14, wherein the indication information specifically indicates a first data radio bearer DRB corresponding to the first discard timer for low importance.

16. The method according to any one of claims 13 to 15, wherein the indication information further indicates duration of the first discard timer for low importance.

17. The method according to any one of claims 13 to 16, wherein the indication information specifically indicates that the first discard timer for low importance is configured for uplink data of the terminal device; and
before the generating the indication information, the method further comprises:
sending configuration information to the terminal device, wherein the configuration information is used to configure the first discard timer for low importance for the uplink data of the terminal device.

18. The method according to claim 17, wherein before the generating indication information, the method further comprises:
receiving first request information from the second network device, wherein the first request information is used to request to configure the first discard timer for low importance for the uplink data of the terminal device.

19. The method according to claim 18, wherein the first request information is specifically used to request to configure the first discard timer for low importance for uplink data related to the first DRB of the terminal device.

20. The method according to any one of claims 13 to 19, wherein after the sending the indication information to the first network device, the method further comprises:
receiving second request information from the first network device, wherein the second request information is used to request to configure a second discard timer for low importance for uplink data related to a second DRB of the terminal device.

21. The method according to any one of claims 13 to 16, wherein the indication information specifically indicates that the first discard timer for low importance is configured for downlink data of the terminal device.

22. The method according to claim 21, wherein the method further comprises:
receiving first information from the first network device, wherein the first information is used to determine whether to activate the first discard timer for low importance; and
activating or deactivating the first discard timer for low importance based on the first information.

23. The method according to claim 22, wherein the first information comprises at least one of the following information: suggestion information, network congestion degree assistance information, air interface quality assistance information, an expected data amount or an expected rate, and protocol data unit set importance PSI suggestion information, wherein
the suggestion information is used to suggest whether to activate the first discard timer for low importance; the network congestion degree assistance information indicates a network congestion degree; the air interface quality assistance information indicates uplink or downlink air interface data transmission quality; the expected data amount or the expected rate indicates an expected data amount or an expected data transmission rate of an air interface; and the PSI suggestion information indicates PSI of the data corresponding to the first discard timer for low importance.

24. The method according to any one of claims 13 to 23, wherein the first network device is a distributed unit DU, and the second network device is a central unit CU.

25. A communication apparatus, comprising a unit for performing the method according to any one of claims 1 to 12.

26. A communication apparatus, comprising a unit for performing the method according to any one of claims 13 to 24.

27. A communication apparatus, comprising a processor, wherein the processor is coupled to a memory, the memory is configured to store a computer program or instructions, and the processor is configured to execute the computer program or the instructions in the memory, to cause the apparatus to perform the method according to any one of claims 1 to 12, or cause the apparatus to perform the method according to any one of claims 13 to 24.

28. A computer-readable storage medium, wherein the computer-readable storage medium stores a computer program or instructions, and when the computer program or the instructions are run on a computer, the computer is caused to perform the method according to any one of claims 1 to 12, or the computer is caused to perform the method according to any one of claims 13 to 24.

29. A chip, wherein the chip is coupled to a memory, and is configured to read and execute program instructions stored in the memory, to implement the method according to any one of claims 1 to 12 or implement the method according to any one of claims 13 to 24.

30. A communication system, comprising a first network device and a second network device, wherein the first network device is configured to perform the method according to any one of claims 1 to 12, and the second network device is configured to perform the method according to any one of claims 13 to 24.
